# EUROPÄISCHE PATENTSCHRIFT

(11) **EP 0 718 536 B1**
(45) Veröffentlichungstag und Bekanntmachung des Hinweises auf die Patenterteilung: **17.02.1999**
(21) Anmeldenummer: 95250309.2
(22) Anmeldetag: 20.12.1995
(51) Int. Cl.: F16L 13/16, F16L 19/02

(54) **Leitungsrohrverbindung**
Pipe coupling
Raccords de tuyaux

(30) Priorität: 23.12.1994 DE 4447392
(43) Veröffentlichungstag der Anmeldung: 26.06.1996
(73) Patentinhaber: MANNESMANN Aktiengesellschaft, 40213 Düsseldorf (DE)
(72) Erfinder: Foering, Herbert, Dipl.-Ing., D-42789 Solingen (DE)
(74) Vertreter: Meissner, Peter E., Dipl.-Ing.

(56) Entgegenhaltungen:
- DE-A- 2 136 898
- DE-U- 9 104 147
- DE-U-29 501 800
- DE-U-29 505 091
- FR-A- 515 991
- US-A- 3 729 217

## Beschreibung

Die Erfindung betrifft eine Verbindung eines Elementes eines Leitungsrohrsystems, insbesondere Formte, Ventil und Armature mit einem Leitungsrohr gemäß dem Gattungsbegriff des Hauptanspruches.

Aus der EP 0 507 423 A1 ist ein gattungsmäßiges Verbindungssystem bekannt. Bei diesem System wird der Anschlußstutzen durch einen Adapter gebildet, der lösbar mit dem gegossenen oder gepreßten Element verbunden ist. Dieser Adapter ist ein aus Blech hergestelltes standardisiertes Fittingelement, dessen dem Leitungsrohr zugewandtes Ende einen Ringwulst mit einem daran angeordneten Runddichtring aufweist. Daran schließt sich ein zylindrisch ausgebildeter Abschnitt mit einer die Anschlagstelle für das eingeschobene Leitungsrohr bildenden Vertiefung an. Das dem Element zugewandte Ende des Adapters ist über Schweißen, Löten oder Kleben mit einem Flansch verbunden, der wahlweise über Schrauben oder mittels einer Überwurfmutter mit dem Element verbindbar ist. Nachteilig bei dieser Konstruktion ist die aufwendige Verbindungstechnik, um Fittingelement und Flansch miteinander zu verbinden. Das gilt insbesondere dann, wenn es sich um einen Adapter aus einem nichtrostenden Stahl z.B. 1.4401 handelt.

Der DE-GM 73 17 941 ist ein Rohrverbindungsstück entnehmbar, bestehend aus einer Überwurfmutter und einem mit einem Gewindeabschnitt versehenen hülsenförmigen Einschraubstück. Beide sind aus Temperguß und zerspanend hergestellt.Der Lagerbund der Überwurfmutter nimmt den Bund eines dann eingesetzten schweißfähigen Rohransatzstückes auf. Gegebenenfalls ist zwischen der Stirnseite des Bundes des Rohransatzstückes und der Stirnseite des Einschraubstückes eine Dichtung angeordnet. Nachteilig bei dieser Konstruktion ist, daß sie nicht für ein Verpreßsystem geeignet ist und die Verbindung mit dem Leitungsrohr über eine Schweißnaht erfolgt.
Aufgabe der Erfindung ist es, eine Verbindung eines Elementes eines Leitungsrohrsystems, insbesondere Formteil, Ventil und Armatur mit einem Leitungsrohr anzugeben, die ohne eine aufwendige Verbindungstechnik auskommt.

Diese Aufgabe wird mit den im kennzeichnenden Teil des Hauptanspruches angegebenen Merkmalen gelöst. Vorteilhafte Weiterbildungen sind Bestandteil von Unteransprüchen.

Ein standardisiertes Fittingelement, in Form einer Kurzmuffe aus Blech weist an einem Ende einen angeformten Steg auf, der den Anschlag für die den Adapter mit dem Element verbindende Überwurfmutter bildet. Wahlweise weist der Steg eine radiale Erstreckung auf, die größer ist als der größte Durchmesser des gegenüberliegenden Ringwulstes, so daß die Überwurfmutter mit dem Kragen von der Seite des Ringwulstes über den Fitting geschoben werden kann. Alternativ ist der Steg zweistufig ausgebildet, wobei der Durchmesser der außenliegenden ersten Stufe in etwa gleich groß ist, wie der des Ringwulstes und die innenliegende niedrigere Stufe eine Rücksprungtiefe aufweist, die etwa der halben Breite eines Sprengringes entspricht. Dieser Sprengring wird auf der zweiten Stufe angeordnet und die über die außenliegende Stufe hinausragende Ringfläche des Sprengringes bildet den Anschlag für die Überwurfmutter. Beide Lösungen sind wirtschaftlicher als die aufwendige Verbindungstechnik, zumal die Anformung der einen Seite des Fittingelementes in kurzen Taktzeiten in einer Pressestattfinden kann. Außerdem entfällt die separate Herstellung eines Flansches, der nach dem Stand der Technik mit dem Fittingelement, beispielsweise durch Schweißen, verbunden wurde. Alternativ ist es auch möglich, das standardisierte Fittingelement als Drehteil herzustellen und an einem Ende einen Steg anzuarbeiten und am anderen Ende einen Ringwulst anzuformen.

In der Zeichnung wird anhand zweier Ausführungsbeispiele die erfindungsgemäße Verbindung näher erläutert.
Es zeigen:
- Fig. 1: einen halbseitigen Längsschnitt durch eine erste erfindungsgemäße Ausführungsform
- Fig. 2: einen halbseitigen Längsschnitt durch eine zweite Ausführungsform.

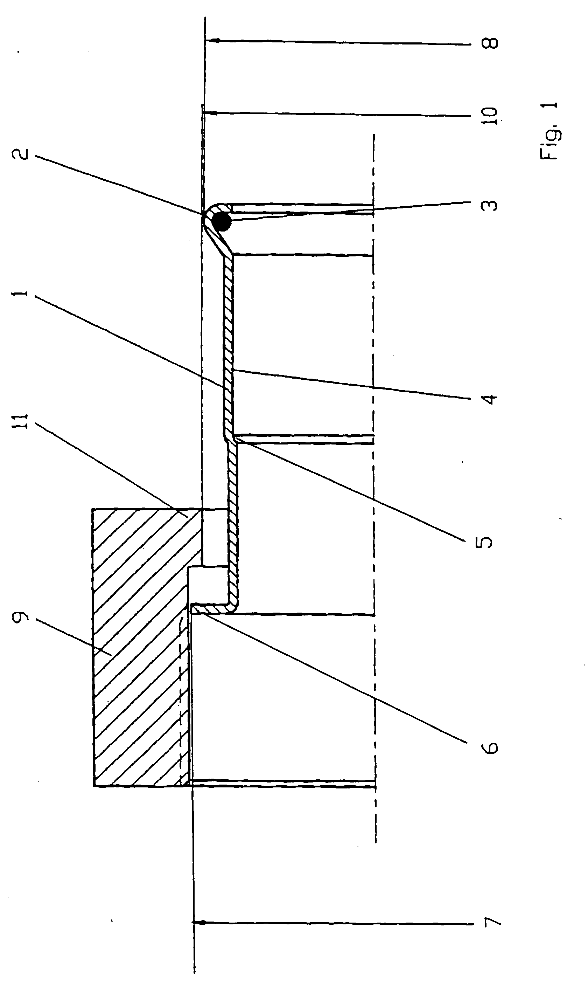

Figur 1 zeigt in einem halbseitigen Längsschnitt eine erste Ausführungsform der vorgeschlagenen Verbindung. Ein aus Blech gefertigtes standardisiertes Fittingelement 1 in Form einer Kurzmuffe, weist in bekannter Weise an der dem zu verbindenden Leitungsrohr zugewandten Seite einen Ringwulst 2 auf, in dem ein Runddichtring 3 angeordnet ist. An den Ringwulst 2 schließt sich auf der linken Seite ein zylindrisch geformter Abschnitt 4 des Fittingelementes 1 an. Dieser Abschnitt 4 geht dann über in eine Vertiefung 5, die den Anschlag bildet für das eingeschobene Leitungsrohr. Auf der dem Element zugewandten Seite weist der Adapter einen angeformten Steg 6 auf. Dieser Steg 6 weist eine radiale Erstreckung 7 auf, die größer ist als der größte Durchmesser 8 des Ringwulstes 2. Dadurch ist es möglich, eine das Element mit dem Adapter verbindende Überwurfmutter 9, dessen geringster Kragendurchmesser 10 größer ist als der zuvor erwähnte größte Durchmesser 8 des Ringwulstes 2, von der linken Seite her über das Fittingelement 1 zu schieben bis der Kragen 11 der Überwurfmutter 9 am Steg 6 zur Anlage kommt.

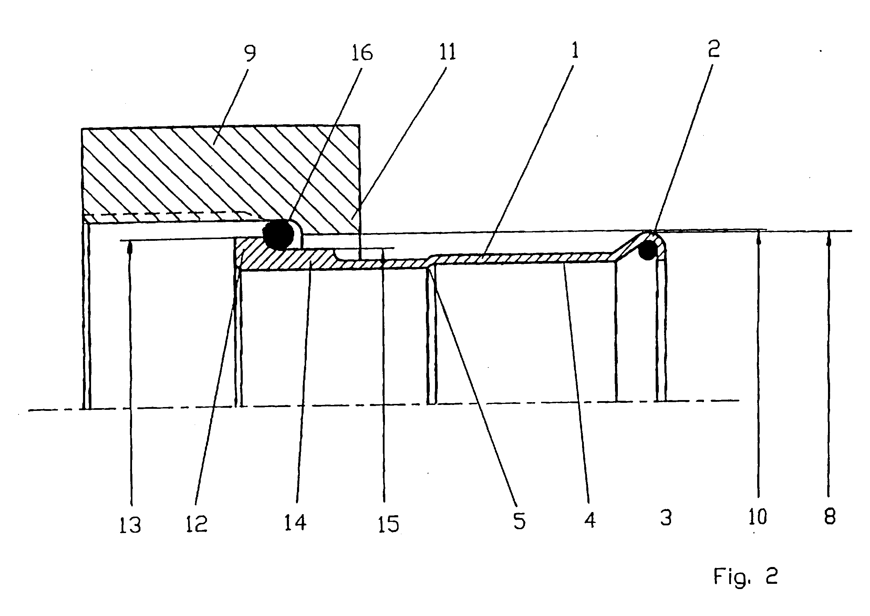

Figur 2 zeigt eine andere Ausführungsform der erfindungsgemäßen Verbindung, wobei für gleiche Teile gleiche Bezugszeichen verwendet worden sind. Im Unterschied zu Figur 1 ist der linke Endbereich des Adapters 1 als zweistufiger Steg ausgebildet. Die außenliegende erste Stegstufe 12 weist eine radiale Erstreckung 13 auf, die etwa gleich ist dem größten Durchmesser 8 des Ringwulstes 2. Die innenliegende zweite Stegstufe 14 hat einen geringeren Durchmesser 15 als die außenliegende erste Stegstufe. Die Durchmesserdifferenz 13,15 entspricht etwa der halben Breite des auf der zweiten Stegstufe 14 angeordneten Sprengringes 16. Die über die erste Stegstufe 12 hinausragende Ringfläche des Sprengringes 16 bildet den Anschlag für die Überwurfmutter 9.

## Patentansprüche

1. Lösbare Verbindung eines gegossenen oder gepreßten Elementes eines Leitungsrohrsystems, insbesondere Formteil, Ventil und Armatur mit einem Leitungsrohr, dessen Endabschnitt in ein standardisiertes Fittingelement (1), dessen dem Leitungsrohr zugewandter Bereich ein wulstartig ausgebildetes und einen Runddichtring (3) aufnehmendes Ende (2) und einen daran anschließenden zylindrisch ausgebildeten Abschnitt (4) mit einer die Anschlagstelle für das eingeschobene Leitungsrohr bildenden Vertiefung (5) aufweist, eingeschoben und mittels eines außen angesetzten Preßwerkzeuges mit dem standardisierten Fittingelement (1) unlösbar verbunden ist und die Verbindung Fittingelement (1) mit Element mittels einer Überwurfmutter (9) erfolgt, deren Kragen (11) an einem einen nach außen sich erstreckenden Steg (6, 12, 14) aufweisenden, mit dem standardisierten Fittingelement (1) verbundenen Adapter zur Anlage kommt, wobei die stirnseitige dem Element zugewandte Ringfläche des Steges (6,12) eine Dichtfläche bildet,
dadurch gekennzeichnet,
daß der Adapter integraler Bestandteil des standardisierten Fittingelementes (1) ist und das Gesamtteil gebildet wird aus einer aus Blech hergestellten Kurzmuffe mit einem an einem Ende angeformten Steg (6, 12, 14).

2. Lösbare Verbindung nach Anspruch 1,
dadurch gekennzeichnet,
daß die radiale Erstreckung (7) des Steges (6) größer ist als der größte Durchmesser (8) des am anderen Ende sich befindenden Ringwulstes (2).

3. Lösbare Verbindung nach Anspruch 1,
dadurch gekennzeichnet,
daß der angeformte Steg abgestuft ist und dessen außenliegende erste Stufe (12) eine radiale Erstreckung (13) aufweist, die etwa gleich ist dem größten Durchmesser (8) des am anderen Ende sich befindenden Ringwulstes (2) und dessen innenliegende zweite Stufe (14) eine Rücksprungtiefe (13,15) aufweist, die in etwa der Hälfte der Breite eines passenden auf der zweiten Stufe (14) anordenbaren Sprengringes (16) entspricht.

## Claims

1. Releasable connection of a cast or pressed element of a line pipe system, in particular a moulding, valve and mounting, to a line pipe, the end portion of which is inserted in a standardised fitting element (1), whose region which is turned towards the line pipe comprises a bead-like end (2) holding an O-ring seal (3) and an adjoining cylindrical portion (4) with an indentation (5) forming the stop point for the inserted line pipe, and which is permanently connected to the standardised fitting element (1) by means of an externally applied press tool, the fitting element (1) being connected to the element by means of a cap nut (9), the collar (11) of which comes to lie against an adapter comprising an outward extending web (6, 12, 14) and connected to the standardised fitting element (1), wherein the front annular face of the web (6, 12) which is turned towards the element forms a sealing face, characterised in that the adapter is an integral component of the standardised fitting element (1), and the overall part is formed from a short sleeve which is made of metal and has a web (6, 12, 14) moulded on at one end.

2. Releasable connection according to claim 1, characterised in that the radial extent (7) of the web (6) is greater than the maximum diameter (8) of the annular bead (2) located at the other end.

3. Releasable connection according to claim 1, characterised in that the moulded-on web is stepped and its outer first step (12) has a radial extent (13) which is approximately equal to the maximum diameter (8) of the annular bead (2) located at the other end and its inner second step (14) has a rebound depth (13, 15) which corresponds approximately to half the width of an appropriate retainer ring (16) which can be disposed on the second step (14).

## Revendications

1. Liaison amovible d'un élément coulé ou pressé d'un système de conduits, en particulier une pièce moulée, une vanne et des accessoires de tuyauterie, avec un conduit, dont le tronçon d'extrémité est introduit dans un élément de raccord standardisé (1), dont la zone en regard du conduit présente une extrémité (2) réalisée en forme de bourrelet et recevant une bague d'étanchéité circulaire (3) et un tronçon (4) cylindrique s'y raccordant ayant un creux (5) formant la position de butée pour le conduit inséré, et est relié de façon inamovible, au moyen d'un outil de pressage appliqué de l'extérieur, à l'élément de raccord standardisé (1) et la liaison de l'élément de raccord (1) avec l'élément est effectuée au moyen d'un écrou d'accouplement (9), dont le collet (11) vient en butée contre un adaptateur présentant une nervure s'étendant vers l'extérieur (6, 12, 14) et relié à l'élément de raccord standardisé (1), la surface annulaire frontale, en regard de l'élément, de la nervure (6, 12) formant une surface d'étanchéité,
caractérisée en ce que l'adaptateur est une partie constitutive intégrale de l'élément de raccord standardisé (1) et la pièce dans son ensemble est formée à partir d'un manchon court fabriqué en tôle comportant une nervure (6, 12, 14) moulée à une extrémité.

2. Liaison amovible selon la revendication 1,
caractérisée en ce que l'extension radiale (7) de la nervure (6) est plus grande que le plus grand diamètre (8) du bourrelet annulaire (2) se trouvant à l'autre extrémité.

3. Liaison amovible selon la revendication 1,
caractérisée en ce que la nervure moulée est subdivisée, et sa première partie externe (12) présente une extension radiale (13) qui est sensiblement égale au plus grand diamètre (8) du bourrelet annulaire (2) se trouvant à l'autre extrémité, et sa seconde partie interne (14) présente une profondeur de retrait (13, 15) qui correspond sensiblement à la moitié de la largeur d'un jonc (16) pouvant être adapté sur la seconde partie (14).
